# EUROPÄISCHE PATENTSCHRIFT

(11) **EP 3 394 192 B1**
(45) Veröffentlichungstag und Bekanntmachung des Hinweises auf die Patenterteilung: **22.11.2023**
(21) Anmeldenummer: 16823244.5
(22) Anmeldetag: 19.12.2016
(51) Int. Cl.: C09J 7/10, B29B 15/14, C09J 9/00

(54) **SEILFÖRMIGES KLEBEBAND**
ROPE-TYPE ADHESIVE TAPE
BANDE ADHÉSIVE EN FORME DE CORDON

(30) Priorität: 21.12.2015 DE 102015226228
(43) Veröffentlichungstag der Anmeldung: 31.10.2018
(73) Patentinhaber: TESA SE, 22848 Norderstedt (DE)
(72) Erfinder: HÄHNEL, Marcel, 25336 Klein Nordende (DE)
(74) Vertreter: tesa SE
(86) Internationale Anmeldenummer: PCT/EP2016/081677
(87) Internationale Veröffentlichungsnummer: WO 2017/108665

(56) Entgegenhaltungen:
- EP-A1- 1 371 680
- EP-A2- 1 176 179
- US-A1- 2012 041 113
- US-A1- 2015 030 851

## Beschreibung

Die Erfindung betrifft ein Klebeband nach dem Oberbegriff des Anspruchs 1. Die Erfindung betrifft auch ein Verfahren zur Herstellung des Klebebandes.

Bisher können in der Breite variierende Klebefugen nur durch Klebstoffe in Form von Kleberaupen vollständig und nahezu ohne Lufteinschlüsse gefüllt werden. Nur hierdurch ist ein optimaler Haftverbund zwischen den Fügeteilen gewährleistet. Je nach Viskosität und geometrischen Gegebenheiten kann es dabei zu starken Auspressungen oder zum Verlaufen der Klebstoffe kommen, was ein Applizieren nicht in jeder Lage möglich macht und spezielle Techniken erforderlich macht, da anderenfalls sensible Flächen verschmutzt würden.

Klassische Klebebänder bestehen in der Regel aus einer Klebmasse, die sich auf einem Träger befindet oder ein viskoelastischer Träger ist gleichzeitig auch die Klebmasse. Eine neue Klasse an Klebebändern kann mehrkomponentig sein. Hier findet eine Aushärtungsreaktion bzw. Polyreaktion erst nach dem Zusammenbringen statt. Klebebandprodukte werden üblicherweise in einem rechteckigen Querschnittsprofil und bestimmter Länge ausgebildet. Mit dieser geometrischen Konfiguration und bestehenden Produktaufbauten ist es jedoch nicht möglich, sich variierenden Klebefugen, beispielsweise im Automobilbau, anzupassen, da ein seitliches Verpressen wie bei Kleberaupen nicht möglich ist.

Die EP 1 176 179 A2 offenbart ein seilförmiges Klebeband mit einer Mehrzahl an entlang der Längsrichtung verlaufenden Filamenten, von denen zumindest einige von einer Klebmasse zumindest ummantelt sind. Die Filamente sind im Querschnitt konzentrisch um die Längsrichtung angeordnet.

Es ist daher Aufgabe der Erfindung, ein Klebeband zur Verfügung zu stellen, das ohne Schäumung, kompressible Füllstoffe, technisch, chemisch oder physikalisch erzeugte Lufteinschlüsse oder geschäumte Träger variierenden Breiten von Klebefugen anpassbar ist.

Es ist auch Aufgabe der Erfindung, ein Verfahren zur Herstellung eines solchen Klebebandes zur Verfügung zu stellen.

Die Aufgabe wird in ihrem ersten Aspekt durch ein eingangs genanntes Klebeband mit den Merkmalen des Anspruchs 1 hinsichtlich der Vorrichtung gelöst.

Das erfindungsgemäße seilförmige Klebeband weist eine Längsrichtung und einen Querschnitt senkrecht zur Längsrichtung auf. Erfindungsgemäß weist das Klebeband eine Mehrzahl an entlang der Längsrichtung verlaufenden Filamenten auf, die von einer Klebmasse zumindest ummantelt sind. Die Filamente sind im Querschnitt konzentrisch um die Längsrichtung angeordnet, und die Filamente sind in Längsrichtung miteinander verdrillt angeordnet. Durch haftklebrige Filamente werden die miteinander verdrillten Filamente miteinander verklebt.

Bei einem seilförmigen Klebeband handelt es sich um ein Erzeugnis, das in Längsrichtung eine Längsausdehnung aufweist, die um ein Vielfaches größer ist als eine Ausdehnung entlang des Querschnitts des seilförmigen Klebebandes. Das seilförmige Klebeband ist im Querschnitt etwa kreisförmig.

Das erfindungsgemäße Klebeband ist vorzugsweise entlang der gesamten Längsausdehnung im Querschnitt im Wesentlichen gleichbleibend ausgebildet.

Vorzugsweise ist die Verdrillung entlang des Klebebandes periodisch translationsinvariant in der Längsrichtung. Günstigerweise erfolgt die Verdrillung entlang der gesamten Längsausdehnung des Klebebandes. Dadurch kann das Klebeband in seiner gesamten Länge und unabhängig von einem gerade gewählten Abschnitt entlang des Klebebandes gleichbleibend genutzt werden.

Das Klebeband ist aus einer Mehrzahl von Filamenten gebildet. Ein Filament ist ein ebenfalls in seiner jeweiligen Längsrichtung länglich ausgebildetes, in seinem Querschnitt senkrecht zu seiner Längsrichtung rund, vorzugsweise kreisförmig ausgebildet. Der Querschnitt jedes Filamentes ist entlang seiner Längsausdehnung gleichbleibend.

Das Klebeband weist mehrere nebeneinander angeordnete Filamente auf, die gebündelt werden bzw. sind und entlang der Längsrichtung miteinander verdrillt werden bzw. sind. Das Klebeband kann aus einer Filamentart oder aus unterschiedlichen Filamentarten bestehen, wobei jede Art eine Komponente eines mehrkomponentigen Klebesystems bestimmt. Die Filamente können daher ein einkomponentiges, ein zwei- oder mehrkomponentiges Klebmassesystem ausbilden, wobei jede Filamentart jeweils aus einer Klebmasse besteht.

Das Klebeband weist vorzugsweise zumindest ein erstes Filament auf, das ein Filament ist, das von einer ersten Klebmasse zumindest ummantelt ist, und ein zweites Filament, das ein Filament ist, das von einer zweiten Klebmasse zumindest ummantelt ist. Insbesondere können als erste und zweite Klebmasse eines zweikomponentigen Klebmassesystems die in der WO 2014/202402 offenbarten Klebmassesysteme verwendet werden.

Die in der genannten Druckschrift genannten Klebmassesysteme werden in Film-Form bereitgestellt und sind daher für die vorliegende Erfindung gut handhabbar. Das verwendete zwei-komponentige Klebmassesystem umfasst zwei reaktive Klebmassefilamente, wobei das erste Klebmassefilament eine polymere Filmbildner-Matrix, mindestens ein reaktives Monomer oder Reaktivharz und mindestens einen Initiator, insbesondere Radikalinitiator umfasst und das zweite Klebmassefilament eine polymere Filmbildner-Matrix, mindestens ein reaktives Monomer oder Reaktivharz und mindestens einen Aktivator umfasst.

Die polymere Filmbildner-Matrix ist vorzugsweise ein thermoplastisches Polymer, vorzugsweise ein thermoplastisches Polyurethan, oder ein Elastomer oder ein thermoplastisches Elastomer. Das reaktive Monomer umfasst mindestens einen Vertreter, ausgewählt aus Acrylsäure, Acrylsäureester, Methacrylsäure, Methacrylsäureester, Vinylverbindungen und/oder oligomeren oder polymeren Verbindungen mit Kohlenstoff-Kohlenstoff-Doppelbindungen, vorzugsweise Methylmethacrylat, Methacrylsäure, Cyclohexylmethacrylat, Tetrahydrofurfurylmethacrylat, 2-Phenoxyethylmethacrylat und/oder Di(ethylenglykol)methylethermethaycrylat.

Der Radikalinitiator ist vorzugsweise ein Peroxid, vorzugsweise Dimethylbenzylhydroperoxid und der Aktivator ist günstigerweise ein Amin, ein Dihydropyridin-Derivat, ein Übergangsmetallsalz oder ein Übergangsmetallkomplex, vorzugsweise 3,5-Diethyl-1 ,2-dihydro-1-phenyl-2-propylpyridin.

Es sei jedoch ausdrücklich darauf hingewiesen, dass auch andere ein- oder mehrkomponentige Klebmassesysteme, die geeignet sind, insbesondere dahingehend, dass sie eine Formstabilität aufweisen, verwendet werden können.

Die erste und zweite Klebmasse können zusammen ein zweikomponentiges Klebesystem ausbilden, d. h. die erste und zweite Klebmassekomponente bilden für sich eine vorzugsweise haftklebrige Klebmasse aus, die jedoch nicht von selbst aushärtet. Eine Aushärtereaktion findet erst bei Berührung der ersten mit der zweiten Klebmassekomponente statt. Es ist auch denkbar, dass die ersten und die zweiten Filamente vollständig aus der ersten bzw. aus der zweiten Klebmasse gebildet sind.

In einer anderen Ausführungsform der Erfindung bestehen die ersten und zweiten Filamente jeweils aus derselben Klebmasse, das Klebeband umfasst danach nur erste Filamente. Die Filamente bilden ein einkomponentiges reaktives Klebmassesystem aus, dieses kann durch Temperatur, Feuchtigkeit oder Strahlung gesteuert bzw. getriggert werden, und durch entsprechende Einstellungen von Temperatur, Feuchtigkeit oder Strahlung kann die Vernetzung der Klebmassen der einzelnen Filamente beginnen. Derartig getriggerte Klebmassesysteme sind beispielsweise tesa 61562, 3M SBT 9263, Henkel Terocore 20000 und Lohmann DuploTec10500 SBF.

Daneben können Stützfilamente vorgesehen sein. Ein Stützfilament besteht vollständig aus einem Stützmaterial. Bei dem Stützmaterial kann es sich um einen Kunststoff wie PET handeln, es können jedoch auch Naturstoffe wie Baumwollfäden oder Ähnliches verwendet werden. Auch Garne sind denkbar. Die Stützfilamente zeichnen sich durch eine gegenüber den Klebmassefilamenten höhere Reißfestigkeit in ihrer Längsrichtung aus. Sie geben dem seilförmigen Klebeband eine höhere Reißfestigkeit in Längsrichtung.

Es ist daneben auch bevorzugt vorgesehen, Klebefilamente mit einem Kern auszubilden, der ein Stützmaterial aufweist. Die ersten und zweiten Klebefilamente sind in diesem Fall nicht vollständig aus einer ersten und zweiten Klebmasse gebildet. Vielmehr ist ein Stützkern, der im Wesentlichen den Stützfilamenten entspricht, im Durchmesser jedoch möglicherweise etwas kleiner als diese ist, von der ersten bzw. zweiten Klebmasse vollständig ummantelt.

Die Filamente weisen jeweils einen Durchmesser entlang der gesamten Längsausdehnung in ihrer jeweiligen Längsrichtung von 0,5 mm bis 3 mm auf. Es wird eine Mehrzahl an Filamenten miteinander verdrillt, so dass das Klebeband vorzugsweise insgesamt einen Durchmesser zwischen 0,5 cm bis 1 cm aufweist.

In anderen Ausführungsformen der Erfindung ist es auch denkbar, dass die Filamente nicht nur aus der Klebmasse eines ein- oder zwei- oder mehrkomponentigen Klebmassesystems bestehen oder derartige Klebmassen aufweisen, es ist auch denkbar, dass unabhängig von der Funktionsweise eines mehrkomponentigen Klebmassesystems haftklebrige Filamente vorgesehen sind, die zur Erzeugung einer anfänglichen hinreichenden Haftklebrigkeit vorgesehen sind, damit die anderen Filamente als auch Stützfilamente, die ggf. keine anfängliche hinreichende Haftklebrigkeit aufweisen, zusammenkleben und die seilförmige Gestalt des Haftklebebandes bewahren.

In einer weiteren bevorzugten Ausführungsform des erfindungsgemäßen seilförmigen Klebebandes weisen die Filamente nur eine Klebmasse eines einkomponentigen reaktiven Klebmassesystems auf. Dieses einkomponentige reaktive Klebmassesystem kann durch Temperatur, UV-Strahlung oder Feuchtigkeit gesteuert werden, und zwar insofern, dass durch Überschreitung bestimmter Grenzwerte eine Polymerisation des einkomponentigen reaktiven Klebmassesystems einsetzt. Hier, wie auch bei den anderen Ausführungsformen, ist es natürlich auch denkbar, dass das ein- und zweikomponentige Klebmassesystem miteinander kombiniert werden oder das bei den einkomponentigen Klebmassesystemen zusätzlich Stützfilamente oder haftklebrige Filamente eingefügt werden, um ein seilförmiges Klebeband mit hinreichender Formstabilität und/oder Zugfestigkeit zur Verfügung stellen zu können.

Die Aufgabe wird hinsichtlich des Verfahrens durch ein Verfahren mit den Merkmalen des Anspruchs 8 gelöst.

Das Verfahren eignet sich insbesondere zur Herstellung einer der oben genannten seilförmigen Klebebänder, indem zunächst Filamente aus einer Klebmasse gefertigt, dann aufgewickelt werden und dann Filamente wieder abgerollt werden, die Filamente vorzugsweise gebündelt nebeneinander angeordnet werden, so dass sie eine konzentrischen Anordnung annehmen, und dann miteinander verdrillt werden, wobei die miteinander verdrillten Filamente haftklebrig sind und die Filamente miteinander verkleben.

Die Filamente können bei allen Herstellungsverfahren als ein- oder zwei- oder mehrkomponentige Klebmassesysteme ausgebildet sein.

Es eignen sich verschiedene Verfahren zur Herstellung der Filamente.

Die Filamente können gezogen werden.

Die Filamente können bei hinreichender Viskosität der ersten und zweiten Klebmasse auch direkt aus einem ersten und auch einem zweiten Klebmassebad gezogen werden. Dabei können erste Filamente aus einem ersten Klebmassebad, das eine erste Klebmasse aufweist, und zweite Filamente aus einem zweiten Klebmassebad, das eine zweite Klebmasse aufweist, gezogen werden. Bei einkomponentigen Klebmassesystemen werden die Filamente vorzugsweise aus einem gemeinsamen Klebmassebad gezogen.

Es ist auch vorzugsweise vorgesehen, dass die ersten und/oder zweiten Filamente einen Stützkern aufweisen und der Stützkern aus dem jeweiligen Klebmassebad herausgezogen wird. Der Stützkern selbst ist ein ebenfalls filamentartiges Gebilde, an dessen Außenfläche sich die erste bzw. die zweite Klebmasse anhaftet und so das mit einem Stützkern versehene erste und zweite Filament aus dem Klebmassebad gezogen werden kann. Dadurch sind die Filamente reißfester in ihrer jeweiligen Längsrichtung.

Die ersten und zweiten Klebmassen sind vorzugsweise lösungsmittelhaltig oder wasserbasiert. Nach Verdampfen des Lösungsmittels weisen die erste und zweite Klebmasse eine gewisse Festigkeit auf. Sie sind zwar noch haftklebrig, können jedoch mit dem Stützkern, gegebenenfalls auch ohne Stützkern, auf einer Rolle aufgewickelt werden und gelagert werden. Kurz vor der Verwendung des seilförmigen Klebebandes werden die auf den Rollen aufgewickelten Filamente nebeneinandergelegt, gebündelt und unter Hinzunahme von gegebenenfalls Stützfilamenten, die ebenfalls auf Rollen aufgewickelt sind, von den Rollen gleichmäßig abgezogen und während des Abziehens miteinander verdrillt. Aufgrund der Haftklebrigkeit der ersten und zweiten Klebmasse der ersten und zweiten Klebefilamente entsteht ein verdrilltes Klebeband, das eine hinreichende Querschnittsstabilität aufweist, um dann weiterverwendet werden zu können.

Vorzugsweise bilden die ersten und zweiten Klebmassen ein zweikomponentiges Klebstoffsystem aus. Bei Berührung der beiden Klebmassekomponenten beginnt eine Aushärtereaktion. Die Dauer der Aushärtereaktion ist der jeweiligen Verwendung angepasst.

Insbesondere ist das Klebeband zur Verklebung von Metallfügeteilen im Automobilbereich bestimmt und gedacht. Dabei wird in einen Spalt zwischen zwei Fügeteilen das Klebeband von außen eingepresst. Da die Filamente in Längsrichtung gegeneinander trotz ihrer Haftklebrigkeit verschiebbar sind und die erste und die zweite Klebmasse plastisch verformbar bleiben, bis sie vollständig ausgehärtet sind, kann das Klebeband in Fugen hineingedrückt werden, ohne dabei tropfend auf von Klebmasse freizuhaltende Fügeteilflächen zu gelangen.

Es ist auch denkbar, dass das Klebeband auf die eine Fläche eines Fügeteils an der vorgegebenen Position aufgebracht wird und das zweite Fügeteil mit einer vorgegebenen Kraft, vorzugsweise zwischen 1 kg bis 40 kg pro Meter, auf das erste Fügeteil aufgedrückt wird und die beiden Fügeteilflächen entlang des Klebebandes fest miteinander verklebt werden, obwohl die zwischen den Fügeteilen entstehende Spaltbreite über die gesamte Ausdehnung des Spaltes nicht eine exakt konstante Breite aufweist, da sich das Klebeband in seinem Durchmesser der unterschiedlichen Spaltbreite anpassen kann.

Das erfindungsgemäße seilartige Klebeband wird vorzugweise durch Verdrillen von Filamenten hergestellt, wobei die Filamente in einem Extrusionsverfahren hergestellt werden. Dabei wird die dickflüssige Klebmasse durch eine Düse gedrückt, und es werden Filamente mit gleichbleibendem Querschnitt erzeugt. Das Extrusionsverfahren eignet sich insbesondere zur Herstellung von Filamenten ohne Stützkern, d. h. Filamente, die homogen aus einer Klebmasse bestehen. Vorzugsweise werden erste Filamente in einem ersten Extrusionsverfahren und zweite Filamente in einem zweiten Extrusionsverfahren hergestellt; dabei können die Querschnitte der ersten und zweiten Filamente unterschiedlich sein, sie können aber auch gleich sein. Die ersten und zweiten Filamente bestehen dabei vorzugsweise aus verschiedenen Klebmassen eines zweikomponentigen Klebmassesystems. Natürlich ist es grundsätzlich auch denkbar, dass die ersten und zweiten Filamente aus der gleichen Klebmasse aufgebaut sind und trotzdem entlang ihrer Längsrichtung einen unterschiedlichen Querschnitt aufweisen.

In einer weiteren bevorzugten Ausführungsform des erfindungsgemäßen Verfahrens werden die ersten und zweiten Filamente durch Umspritzen oder Ummanteln eines Stützkerns hergestellt, dabei kann der gleiche Stützkern oder es können unterschiedliche Stützkerne für verschiedenen erste Filamente in einem ersten Ummantelungsverfahren von einer ersten Klebmasse ummantelt bzw. umspritzt werden und zweite Filamente in einem zweiten Ummantelungsverfahren von einer zweiten Klebmasse ummantelt bzw. umspritzt werden. Auch hier können die ersten und zweiten Filamente mit der derselben Klebmasse gebildet werdenund eines der oben genannten einkomponentigen Klebesysteme ausbilden.

In einer weiteren bevorzugten Ausführungsform des erfindungsgemäßen Verfahrens werden die ersten und zweiten Filamente als Längsstreifen aus einer Klebmassefolie geschnitten, dabei kann eine erste Klebmassefolie aus einer ersten Klebmasse und eine zweite Klebmassefolie aus einer zweiten Klebmasse zur Verfügung gestellt werden. Die aus der Klebmassefolie geschnittenen Längsstreifen sind im Querschnitt zunächst in etwa rechteckig oder quadratisch, sie können durch nachträgliches Handling, insbesondere Rollen oder Ähnliches, im Querschnitt entlang ihrer gesamten Längsrichtung abgerundet werden, vorzugsweise kreisrund ausgebildet werden.

Es ist ebenfalls bevorzugt vorgesehen, dass die Stützfilamente vor der Verdrillung plasmaaktiviert werden. Es kann auch vorgesehen sein, dass die Stützkerne vor der Beschichtung mit der ersten bzw. zweiten Klebmasse plasmaaktiviert werden, so dass eine stärkere Haftung der ersten bzw. zweiten Klebmasse auf dem Stützkern bzw. eine stärkere Haftung der Klebefilamente auf dem Stützfilament ausgebildet wird.

Die Erfindung wird anhand eines Ausführungsbeispiels in zwei Figuren beschrieben. Dabei zeigen:
- Fig. 1: eine perspektivische Darstellung eines erfindungsgemäßen seilförmigen Klebebandes,
- Fig. 2: eine Darstellung des an einem Ende zusammengedrückten seilförmigen Klebebandes gemäß Fig. 1.

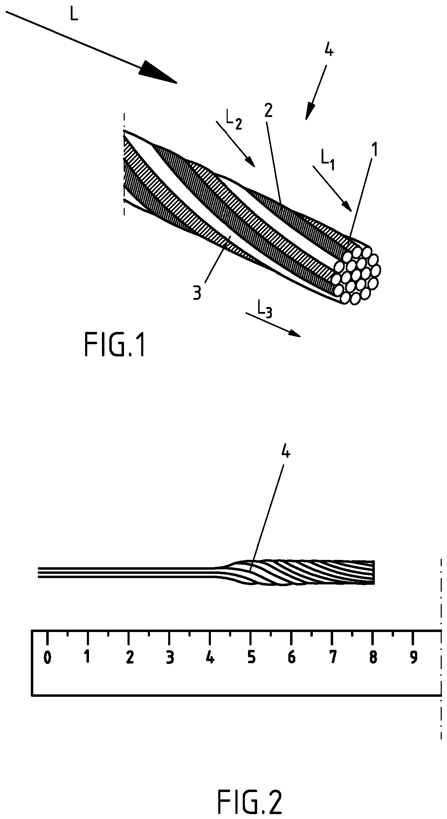

Das in Fig. 1 dargestellte seilförmige Klebeband 4 weist drei verschiedene Arten von Filamenten 1, 2, 3 auf. Erste Klebefilamente 1 bestehen aus einer ersten Klebmasse. Die Filamente 1, 2, 3 sind jeweils länglich mit einer jeweiligen Längsrichtung L₁, L₂, L₃ ausgebildet. Erste Klebefilamente 1 sind in jedem Querschnitt senkrecht zur ersten Längsrichtung L₁ entlang ihrer gesamten Längsausdehnung kreisförmig ausgebildet und weisen einen Durchmesser von etwa 1 mm auf. Zweite Klebefilamente 2 bestehen aus einer zweiten Klebmasse. Sie sind in jedem ihrer Querschnitte senkrecht zur zweiten Längsrichtung L₂ entlang ihrer gesamten Längsausdehnung ebenfalls kreisförmig ausgebildet und weisen einen Durchmesser von ebenfalls etwa 1 mm auf. Des Weiteren sind dritte Filamente, die im weiteren auch als Stützfilamente 3 bezeichnet werden, vorgesehen, die aus einem Stützmaterial bestehen, das ein Polymermaterial wie PET, ein Composite oder ein beliebiges organisches, metallisches oxydisches oder anorganisches Material sein kann, das in der dritten Längsrichtung L₃ eine höhere Reißfestigkeit als die ersten und zweiten Klebefilamente 1, 2 aufweist. Der Durchmesser der Stützfilamente 3 ist ebenfalls entlang der gesamten Längsausdehnung konstant und beträgt etwa 1 mm. Die Durchmesser der einzelnen Filamente 1, 2, 3 können grundsätzlich zwischen 0,5 bis 3 mm liegen. Die Filamente 1, 2, 3 werden zur Herstellung des in Fig. 1 dargestellten seilförmigen Klebebandes 4 gebündelt nebeneinander gelegt, so dass sie eine konzentrischen Anordnung annehmen und dann miteinander verdrillt werden. Da die ersten und zweiten Klebefilamente 1, 2 aus einem ersten und einem zweiten Klebmittel bestehen, das, wenn es noch nicht vollständig ausgehärtet ist, haftklebrig ist, behalten die verdrillten Filamente ihre Seilform bei und fallen nicht auseinander und können in der in Fig. 1 dargestellten Seilform verarbeitet werden. Das seilförmige Klebeband 4 in Fig. 1 hat die äußere Gestalt und auch innere Struktur eines Seiles aus einzelnen Fasern, die miteinander verdrillt sind. Die Filamente 1, 2, 3 des seilförmigen Klebebandes 4 in Fig. 1 sind, auch wenn ihre Oberfläche haftklebrig ist, in Längsrichtung L des seilförmigen Klebebandes 4 gegeneinander unter Krafteinwirkung verschiebbar angeordnet. Dadurch ist das seilförmige Klebeband 4 in Fig. 1 insbesondere zur Verklebung von zwei Fügeteilen mit variierender Spaltbreite geeignet. Die zwei aneinandergefügten Fügeteile weisen einen Spalt zwischen sich auf, entlang dem eine Verklebung der beiden Fügeteile erfolgen soll. Eine Spaltbreite kann über die Ausdehnung des Spaltes veränderlich sein. Ein Durchmesser des seilförmigen Klebebandes 4 in Fig. 1 wird so gewählt, dass es der größten Spaltbreite zwischen dem ersten und zweiten Fügeteil entspricht, und dann wird das seilförmige Klebeband 4 in den Spalt entlang der gesamten Spaltlänge hineingedrückt. Da die Filamente 1, 2, 3 zum einen in Längsrichtung L, aber auch entlang eines Querschnitts des seilförmigen Klebebandes 4, der senkrecht zur Längsrichtung L angeordnet ist, beweglich sind und die Klebmassen darüber hinaus im nicht ausgehärteten Zustand plastisch verformbar sind, lässt sich das seilförmige Klebeband 4 gemäß Fig. 1 in gegenüber dem Durchmesser des seilförmigen Klebebandes 4 schmalere Spaltabschnitte des Spaltes hineindrücken. Das seilförmige Klebeband 4 ist in jedem seiner Querschnitte plastisch verformbar und kann somit insbesondere zur Verklebung von Fügeteilen im Automobilbau verwendet werden. Spaltbreiten von Fügeteilen sind dabei zwar weitgehend gleichbleibend, jedoch treten mitunter Spalte mit entlang ihrer Ausdehnung unterschiedlicher Breite auf, die bisher durch Klebebänder nicht hinreichend fest miteinander verklebt werden konnten. Bisher mussten flüssige Klebmassen, die beispielsweise aus Tuben zur Verfügung gestellt wurden, in den Spalt hineingedrückt werden.

Der Vorteil des erfindungsgemäßen seilförmigen Klebebandes 4 besteht insbesondere darin, dass die Klebefilamente 1, 2 aus verschiedenen Klebstoffkomponenten eines zweikomponentigen Klebstoffsystems bestehen können. Die ersten und zweiten Klebefilamente 1, 2 sind zwar plastisch verformbar, jedoch nicht flüssig, und sie können problemlos in einen Spalt unterschiedlicher Spaltbreite hineingedrückt werden. Dadurch wird einem Verschmieren der Klebmasse auf Flächen des Fügeteils, die klebmassefrei bleiben sollen, entgegengewirkt.

In der Fig. 2 ist das seilförmige Klebeband 4 gezeigt, das zwischen zwei Fügeteile gelegt wurde und wieder zwischen den beiden Fügeteilen herausgenommen wurde. Die beiden Fügeteile wurden mit einem Gewicht von 1 kg bis 40 kg pro Meter belastet, und das zwischen den Fügeteilen eingebrachte linke Ende des seilförmigen Klebebandes 4 wurde zusammengedrückt. Das seilförmige Klebeband 4 weist somit eine hinreichende plastische Verformbarkeit auf. Das seilförmige Klebeband 4 bleibt auch unter während des Fertigungsprozesses im Automobilbereich zulässigen Drucken und Belastungen pro Quadratzentimeter noch verformbar, und damit können auch Fügeteile mit schmalen Spaltbreiten miteinander verklebt werden. Das in der Fig. 1 dargestellte seilförmige Klebeband 4 wird tatsächlich erst kurz vor der Verwendung, d. h. kurz vor dem Verkleben der beiden Fügeteile selbst, endkonfektioniert, indem mehrere Rollen von Filamenten 1, 2, 3 zum Verwendungsort gebracht werden. In der Fig. 1 werden sechs Rollen der ersten Klebefilamente 1 und acht Rollen der zweiten Klebefilamente 2 sowie zwei Rollen der Stützfilamente 3 zum Verwendungsort gebracht. Die Enden der Filamente 1, 2, 3 werden gebündelt, d. h. konzentrisch angeordnet und alle gleichzeitig miteinander von den Filamentrollen abgezogen und während des Abziehens gemäß Fig. 1 miteinander verdrillt, so dass erst beim Abziehen das in Fig. 1 dargestellte seilförmige Klebeband 4 endkonfektioniert wird.

Bei dem Kontakt der ersten Klebmasse mit der zweiten Klebmasse des zweikomponentigen Klebesystems setzt eine herkömmliche Aushärtereaktion durch Polymerisation o. Ä. ein. Die Aushärtereaktion kann, je nach Verwendung der ersten und zweiten Klebmasse, wenige Minuten bis mehrere Stunden dauern, und die Dauer der Aushärtereaktion ist dem Produktionsprozess, d. h. der benötigten Dauer zur Verklebung des ersten und zweiten Fügeteils angepasst. Damit eignet sich das seilförmige Klebeband gemäß Fig. 1 insbesondere auch zur schmierfreien Verklebung von Fügeteilen mittels eines zweikomponentigen Klebesystems.

### Bezugszeichenliste

- 1: erstes (Klebe)Filament
- 2: zweites (Klebe)Filament
- 3: (Stütz)Filament
- 4: Klebeband

- L₁: Längsrichtung erstes Filament
- L₂: Längsrichtung zweites Filament
- L₃: Längsrichtung Stützfilament
- L: Längsrichtung Klebeband

## Patentansprüche

1. Seilförmiges Klebeband mit einer Längsrichtung (L) und einem Querschnitt senkrecht zur Längsrichtung (L),
mit einer Mehrzahl an entlang der Längsrichtung (L) verlaufenden Filamenten (1, 2, 3), von denen zumindest einige von einer Klebmasse zumindest ummantelt sind, und wobei die Filamente (1, 2, 3) im Querschnitt konzentrisch um die Längsrichtung (L) angeordnet sind und die Filamente (1, 2, 3) in Längsrichtung (L) miteinander verdrillt angeordnet sind,
**gekennzeichnet durch** haftklebrige Filamente, die die miteinander verdrillten Filamente (1, 2, 3) miteinander verkleben.

2. Seilförmiges Klebeband nach Anspruch 1 ,
**dadurch gekennzeichnet, dass** die Filamente (1, 2, 3) im Querschnitt rund entlang ihrer gesamten Längsausdehnung ausgebildet sind.

3. Seilförmiges Klebeband nach Anspruch 1 oder 2,
**dadurch gekennzeichnet, dass** zumindest eines der Filamente (1, 2, 3) einen Stützkern aus einem Stützmaterial aufweist, der von einer Klebmasse ummantelt ist.

4. Seilförmiges Klebeband nach einem der Ansprüche 1 bis 3,
**dadurch gekennzeichnet, dass** zumindest ein erstes Filament (1) von einer ersten Klebmasse und zumindest ein zweites Filament (2) von einer zweiten Klebmasse ummantelt ist und die erste und zweite Klebmasse ein zweikomponentiges Klebesystem ausbilden.

5. Seilförmiges Klebeband nach einem der vorstehenden Ansprüche,
**dadurch gekennzeichnet, dass** Stützfilamente (3) vollständig aus dem Stützmaterial bestehen.

6. Seilförmiges Klebeband nach einem der vorstehenden Ansprüche,
**dadurch gekennzeichnet, dass** die ersten und die zweiten Filamente (1, 2) miteinander verdrillt werden.

7. Seilförmiges Klebeband nach einem der vorstehenden Ansprüche,
**dadurch gekennzeichnet, dass** die ersten und zweiten Filamente (1, 2) dieselbe Klebmasse eines einkomponentigen reaktiven Klebmassesystems aufweisen.

8. Verfahren zur Herstellung eines seilförmiges Klebebandes (4), indem Filamente (1, 2, 3) aus einer Klebmasse gefertigt werden, dann aufgewickelt und anschließend wieder abgerollt werden,
die Filamente (1, 2, 3) nebeneinander angeordnet werden, so dass sie eine konzentrischen Anordnung annehmen und dann miteinander verdrillt werden, wobei die miteinander verdrillten Filamente (1, 2, 3) haftklebrig sind und die Filamente (1, 2, 3) miteinander verkleben.

9. Verfahren nach Anspruch 8,
**dadurch gekennzeichnet, dass** ein Stützkern durch ein Klebmassebad gezogen wird und ein Filament (1, 2) mit dem Stützkern gefertigt wird und wenigstens eines der Filamente (1, 2) mit dem Stützkern neben den anderen Filamenten (1, 2, 3) angeordnet wird und das wenigstens eine Filament (1, 2) mit dem Stützkern mit den anderen Filamenten (1, 2, 3) verdrillt wird.

10. Verfahren nach Anspruch 8 oder 9,
**dadurch gekennzeichnet, dass** erste Filamente (1) aus einem Bad mit erster Klebmasse gezogen werden und zweite Filament (2) aus einem Bad mit zweiter Klebmasse gezogen werden und die ersten und die zweiten Filamente (1, 2) separat voneinander aufgerollt werden und dann die ersten und die zweiten Filamente (1, 2) wieder abgerollt und miteinander verdrillt werden.

11. Verfahren nach Anspruch 8, 9 oder 10,
**dadurch gekennzeichnet, dass** die erste und zweite Klebmasse bei Berührung miteinander eine Aushärtereaktion starten.

12. Verfahren nach Anspruch 8,
**dadurch gekennzeichnet, dass** die Filamente (1, 2, 3) in einem Extrusionsverfahren hergestellt werden.

13. Verfahren nach Anspruch 12,
dadurch, dass die ersten Filamente (1) in einem ersten Extrusionsverfahren aus der ersten Klebmasse extrudiert werden und die zweiten Filamente (2) in einem zweiten Extrusionsverfahren aus der zweiten Klebmasse extrudiert werden.

14. Verfahren nach Anspruch 8,
**dadurch gekennzeichnet, dass** die ersten und die zweiten Filamente (1, 2) durch Umspritzen und/oder Ummanteln des Stützkernes hergestellt werden.

15. Verfahren nach Anspruch 8,
**dadurch gekennzeichnet, dass** die ersten und die zweiten Filamente (1, 2) aus einer Klebmassefolie als Längsstreifen herausgeschnitten werden und die herausgeschnittenen Längsstreifen zu im Querschnitt runden ersten und zweiten Filamenten (1, 2) abgerundet werden.

16. Verfahren nach einem der Ansprüche 8 bis 15,
**dadurch gekennzeichnet, dass** der Stützkern vor der Ummantelung plasmaaktiviert werden.

17. Verfahren nach einem der Ansprüche 8 bis 16,
**dadurch gekennzeichnet, dass** Stützfilamente (3) vor der Verdrillung plasmaaktiviert werden.

## Claims

1. Rope-like adhesive tape having a longitudinal direction (L) and a cross section perpendicular to the longitudinal direction (L),
having a plurality of filaments (1, 2, 3) running along the longitudinal direction (L), of which at least some are at least sheathed by an adhesive, and wherein the filaments (1, 2, 3), in cross section, are arranged concentrically around the longitudinal direction (L) and the filaments (1, 2, 3) are arranged twisted together in the longitudinal direction (L),
**characterized by** pressure-sensitive adhesive filaments which stick the twisted-together filaments (1, 2, 3) to one another.

2. Rope-like adhesive tape according to Claim 1, **characterized in that** the filaments (1, 2, 3) are of round form in cross section along their entire longitudinal extent.

3. Rope-like adhesive tape according to Claim 1 or 2, **characterized in that** at least one of the filaments (1, 2, 3) comprises a supporting core which is composed of a supporting material and which is sheathed by an adhesive.

4. Rope-like adhesive tape according to one of Claims 1 to 3,
**characterized in that** at least a first filament (1) is sheathed by a first adhesive and at least a second filament (2) is sheathed by a second adhesive and the first and second adhesives form a two-component adhesive system.

5. Rope-like adhesive tape according to one of the preceding claims,
**characterized in that** supporting filaments (3) consist completely of the supporting material.

6. Rope-like adhesive tape according to one of the preceding claims,
**characterized in that** the first and the second filaments (1, 2) are twisted together.

7. Rope-like adhesive tape according to one of the preceding claims,
**characterized in that** the first and second filaments (1, 2) comprise the same adhesive of a one-component reactive adhesive system.

8. Method for producing a rope-like adhesive tape (4), in that filaments (1, 2, 3) are manufactured from an adhesive, then wound up and subsequently unwound again,
the filaments (1, 2, 3) are arranged next to one another such that they assume a concentric arrangement and are then twisted together, wherein the twisted-together filaments (1, 2, 3) are pressure-sensitively tacky and the filaments (1, 2, 3) stick to one another.

9. Method according to Claim 8,
**characterized in that** a supporting core is drawn through an adhesive bath and a filament (1, 2) with the supporting core is manufactured and at least one of the filaments (1, 2) with the supporting core is arranged next to the other filaments (1, 2, 3) and the at least one filament (1, 2) with the supporting core is twisted with the other filaments (1, 2, 3).

10. Method according to Claim 8 or 9,
**characterized in that** first filaments (1) are drawn out of a bath comprising first adhesive and second filaments (2) are drawn out of a bath comprising second adhesive and the first and the second filaments (1, 2) are wound up separately from one another and then the first and the second filaments (1, 2) are unwound again and twisted together.

11. Method according to Claim 8, 9 or 10,
**characterized in that** the first and second adhesives start a curing reaction upon contact with one another.

12. Method according to Claim 8,
**characterized in that** the filaments (1, 2, 3) are produced in an extrusion process.

13. Method according to Claim 12,
**characterized in that** the first filaments (1) are extruded from the first adhesive in a first extrusion process and the second filaments (2) are extruded from the second adhesive in a second extrusion process.

14. Method according to Claim 8,
**characterized in that** the first and the second filaments (1, 2) are produced by encapsulation and/or sheathing of the supporting core.

15. Method according to Claim 8,
**characterized in that** the first and the second filaments (1, 2) are cut in the form of longitudinal strips from an adhesive film and the cut longitudinal strips are rounded to form first and second filaments (1, 2) of round cross section.

16. Method according to one of Claims 8 to 15,
**characterized in that** the supporting core is plasma-activated prior to the sheathing.

17. Method according to one of Claims 8 to 16,
**characterized in that** supporting filaments (3) are plasma-activated prior to the twisting.

## Revendications

1. Ruban adhésif en forme de corde présentant une direction longitudinale (L) et une section transversale perpendiculaire à la direction longitudinale (L),
comprenant une pluralité de filaments (1, 2, 3) s'étendant le long de la direction longitudinale (L) dont au moins certains sont au moins enrobés d'un adhésif, et
les filaments (1, 2, 3) étant disposés de manière concentrique en coupe transversale autour de la direction longitudinale (L) et les filaments (1, 2, 3) étant disposés de manière torsadés ensemble dans la direction longitudinale (L),
**caractérisé par** des filaments adhésifs qui collent les filaments torsadés ensemble (1, 2, 3) les uns aux autres.

2. Ruban adhésif en forme de corde selon la revendication 1,
**caractérisé en ce que** les filaments (1, 2, 3) ont une section transversale ronde sur toute leur extension longitudinale.

3. Ruban adhésif en forme de corde selon la revendication 1 ou 2,
**caractérisé en ce qu'**au moins un des filaments (1, 2, 3) comporte une âme de support en un matériau de support qui est enrobé d'un adhésif.

4. Ruban adhésif en forme de corde selon l'une des revendications 1 à 3,
**caractérisé en ce qu'**au moins un premier filament (1) est enrobé d'un premier adhésif et au moins un deuxième filament (2) est enrobé d'un deuxième adhésif et le premier et le deuxième adhésif forment un système adhésif à deux composants.

5. Ruban adhésif en forme de corde selon l'une des revendications précédentes,
**caractérisé en ce que** les filaments de support (3) sont entièrement en le matériau de support.

6. Ruban adhésif en forme de corde selon l'une des revendications précédentes,
**caractérisé en ce que** les premier et deuxième filaments (1, 2) sont torsadés ensemble.

7. Ruban adhésif en forme de corde selon l'une des revendications précédentes,
**caractérisé en ce que** les premier et deuxième filaments (1, 2) ont le même adhésif d'un système adhésif réactif à un composant.

8. Procédé de réalisation d'un ruban adhésif (4) en forme de corde, procédé dans lequel
des filaments (1, 2, 3) sont réalisés à partir d'un adhésif, puis sont enroulés et ensuite sont à nouveau déroulés,
les filaments (1, 2, 3) sont disposés les uns à côté des autres de manière concentrique et sont ensuite torsadés ensemble, les filaments (1, 2, 3) torsadés ensemble étant adhésifs et les filaments (1, 2, 3) collant les uns aux autres.

9. Procédé selon la revendication 8,
**caractérisé en ce qu'**une âme de support est étirée à travers un bain d'adhésif et un filament (1, 2) est réalisé avec l'âme de support et au moins un des filaments (1, 2) pourvu de l'âme de support est disposé à côté des autres filaments (1, 2, 3) et l'au moins un filament (1, 2) pourvu de l'âme de support est torsadé avec les autres filaments (1, 2, 3).

10. Procédé selon la revendication 8 ou 9,
**caractérisé en ce que** des premiers filaments (1) sont étirés d'un bain comportant un premier adhésif et des deuxièmes filaments (2) sont étirés d'un bain comportant un deuxième adhésif et les premiers et deuxièmes filaments (1, 2) sont enroulés séparément les uns des autres et ensuite les premiers et deuxièmes filaments (1, 2) sont à nouveau déroulés et torsadés ensemble.

11. Procédé selon la revendication 8, 9 ou 10,
**caractérisé en ce que** le premier et le deuxième adhésif déclenchent une réaction de durcissement lorsqu'ils entrent en contact l'un avec l'autre.

12. Procédé selon la revendication 8,
**caractérisé en ce que** les filaments (1, 2, 3) sont réalisés par un procédé d'extrusion.

13. Procédé selon la revendication 12,
**caractérisé en ce que** les premiers filaments (1) sont extrudés à partir du premier adhésif dans un premier procédé d'extrusion et les deuxièmes filaments (2) sont extrudés à partir du deuxième adhésif dans un deuxième procédé d'extrusion.

14. Procédé selon la revendication 8,
**caractérisé en ce que** les premier et deuxième filaments (1, 2) sont réalisés par surmoulage et/ou enrobage de l'âme de support.

15. Procédé selon la revendication 8,
**caractérisé en ce que** les premier et deuxième filaments (1, 2) sont découpés dans un film adhésif sous forme de bandes longitudinales et les bandes longitudinales découpées sont arrondies pour former des premier et deuxième filaments (1, 2) qui ont une section transversale ronde.

16. Procédé selon l'une des revendications 8 à 15,
**caractérisé en ce que** l'âme de support est activée par plasma avant d'être enrobée.

17. Procédé selon l'une des revendications 8 à 16,
**caractérisé en ce que** les filaments de support (3) sont activés par plasma avant d'être torsadés.
